(19) **Europäisches Patentamt**

**European Patent Office**

**Office européen des brevets**

(11) Veröffentlichungsnummer: **0 576 709 B1**

(12) # EUROPÄISCHE PATENTSCHRIFT

(45) Veröffentlichungstag der Patentschrift: **08.11.95**

(51) Int. Cl.⁶: **B23Q 3/10**

(21) Anmeldenummer: **92111207.4**

(22) Anmeldetag: **02.07.92**

(54) **Diagonalstrebe für ein System zum Aufbau von Vorrichtungen zum Aufspannen von Werkstücken.**

(43) Veröffentlichungstag der Anmeldung:
**05.01.94 Patentblatt 94/01**

(45) Bekanntmachung des Hinweises auf die Patenterteilung:
**08.11.95 Patentblatt 95/45**

(84) Benannte Vertragsstaaten:
**BE CH DE FR GB IT LI NL**

(56) Entgegenhaltungen:
**EP-A- 0 222 147**

(73) Patentinhaber: **Horst Witte Entwicklungs- und Vertriebs-KG**

**D-21354 Bleckede (DE)**

(72) Erfinder: **Witte, Horst**
**In den Tannen 3**
**D-2121 Nahrendorf (DE)**

(74) Vertreter: **von Raffay, Vincenz, Dipl.-Ing.**
**Patentanwälte Raffay & Fleck**
**Postfach 32 32 17**
**D-20117 Hamburg (DE)**

**Beschreibung**

Die Erfindung betrifft eine Diagonalstrebe nach dem Oberbegriff des Patentanspruches 1.

Aus der EP-PS 222 147 ist ein System bekannt, wie es in dem Oberbegriff des Patentanspruches 1 definiert ist. Dieses System ermöglicht unter Verwendung besonderer Paßschrauben und Mutternteile einen vielseitigen, präzisen und reproduzierbaren Aufbau von Vorrichtungssystemen für Werkzeugmaschinen, insbesondere Meßmaschinen. Es sind sehr unterschiedliche Kombinationsmöglichkeiten mit wenigen Grundelementen, d.h. mit wenigen Grundplatten und Aufnahmeteilen möglich.

Wenn größere Systeme aufgebaut werden sollen, bei denen die einzelnen zu verbindenden Grundplatten und/oder Aufnahmeteile einen entsprechenden Abstand wiederum im vorgegebenen Rastermaß aufweisen sollen, dann wäre ein Fachwerk, ob nun flächig oder räumlich, die richtige Aufbaumöglichkeit, da dieses stabil und leicht ist. Die bekannten Einzelteile des bekannten Systems sind hierzu nicht geeignet, da es durch die diagonale Anordnung nur schwierig oder gar nicht möglich wäre, das Rastermaß im Abstand der zu verbindenden Teile einzuhalten.

Der Erfindung liegt daher die Aufgabe zugrunde, eine Diagonalstrebe der eingangs genannten Art zu schaffen, die einen Aufbau nach Art eines Fachwerkes, der entsprechend stabil ist, ermöglicht, wobei das Rastermaß zwischen den einzelnen zu verbindenden Teilen (Grundplatte und/oder Aufnahmeteile) eingehalten wird.

Diese Aufgabe wird durch die Merkmale des Patentanspruches 1 gelöst.

Anspruch 2 ist darauf gerichtet, daß der Querschnitt der Diagonalstrebe rechteckig oder quadratisch sein kann, wobei vorzugsweise die Höhe und die Breite dem ein- oder mehrfachen des Rasterabstandes entspricht. Die Verbindungsquerbohrungen und die Verbindungsstirnbohrungen sind dann wiederum so angeordnet, daß sie zu dem Rastermaß der Grundplatte und/oder der Aufnahmeteile passen.

Weitere vorteilhafte Ausgestaltungen sind Gegenstand der Unteransprüche 3 bis 6.

Der Erfindung liegt die Gesetzmäßigkeit zugrunde, die sich aus dem Lehrsatz des Pythagoras ergibt. Der Abstand der Verbindungsquerbohrungen der Diagonalstrebe entspricht der Länge der Hypothenuse des rechtwinkligen Dreiecks. Bei der Anordnung in den genannten Winkeln von 36,87° bzw. 53,13° haben die Katheten eine Länge, die dem dreifachen bzw. vierfachen Rasterabstand entspricht, so daß sich die zu verbindenden Teile (Grundplatte und/oder Aufnahmeteile) in einem Abstand von dem drei- oder vierfachen Raster anordnen lassen, so daß bei dem gesamten Aufbau die durch das Rastermaß bedingte Regelmäßigkeit nicht gestört wird. Durch die durch die Wechselwinkelanordnung bedingte Vielseitigkeit ist es möglich, die weiteren "Abstandsschritte" im einfachen Rastermaß durchzuführen. Dieses geschieht durch Anordnung neben den zu verbindenden Teilen, zwischen diesen oder einmal neben und einmal zwischen diesen. Hierdurch ist es bei Einsatz einer Diagonalstrebe nach der Erfindung möglich, in "Abstandsstufen" für die zu verbindenden Teile in einem einfachen Rastermaß vorzugehen. Die Diagonalstreben lassen sich abwechselnd so wie in einem Fachwerk auch in einem räumlichen Fachwerk anordnen, so daß ein leichtes und entsprechend stabiles Fachwerk entsteht. An den Schnittpunkten können die Diagonalstreben unmittelbar aneinander anstoßen und sich dabei auf den angrenzenden Stirnflächen zusätzlich abstützen. Weiterhin können die Stirnflächen zur kraft- und formschlüssigen Abstützung genutzt werden.

Im folgenden wird ein Ausführungsbeispiel und die Anwendung der Erfindung anhand der Zeichnungen näher erläutert.

Es zeigt:

Fig. 1     eine Seitenansicht einer Diagonalstrebe nach einer Ausführungsform der Erfindung im einfachsten Aufbau dargestellt in einem Koordinatensystem;

Fig. 2     eine Seitenansicht eines Endes der Diagonalstrebe nach Fig. 1;

Fig. 3     eine Draufsicht auf die Diagonalstrebe der Fig. 2;

Fig. 4     eine perspektivische Ansicht zur Veranschaulichung einer Montagemöglichkeit der Diagonalstreben zur Verbindung von Grundplatte und/oder Aufnahmeteil;

Fig. 5     eine der Fig. 4 entsprechende perspektivische Ansicht einer anderen Verbindungsmöglichkeit;

Fig. 6     eine den Fig. 4 und 5 entsprechende perspektivische Ansicht einer weiteren Verbindungsmöglichkeit;

Fig. 7     eine den Fig. 4 bis 6 entsprechende perspektivische Ansicht einer weiteren Verbindungsmöglichkeit;

Fig. 8     eine den Fig. 4 bis 7 entsprechende perspektivische Ansicht einer weiteren Verbindungsmöglichkeit; und

Fig. 9     eine den Fig. 4 bis 8 entsprechende perspektische Ansicht noch einer weiteren Verbindungsmöglichkeit.

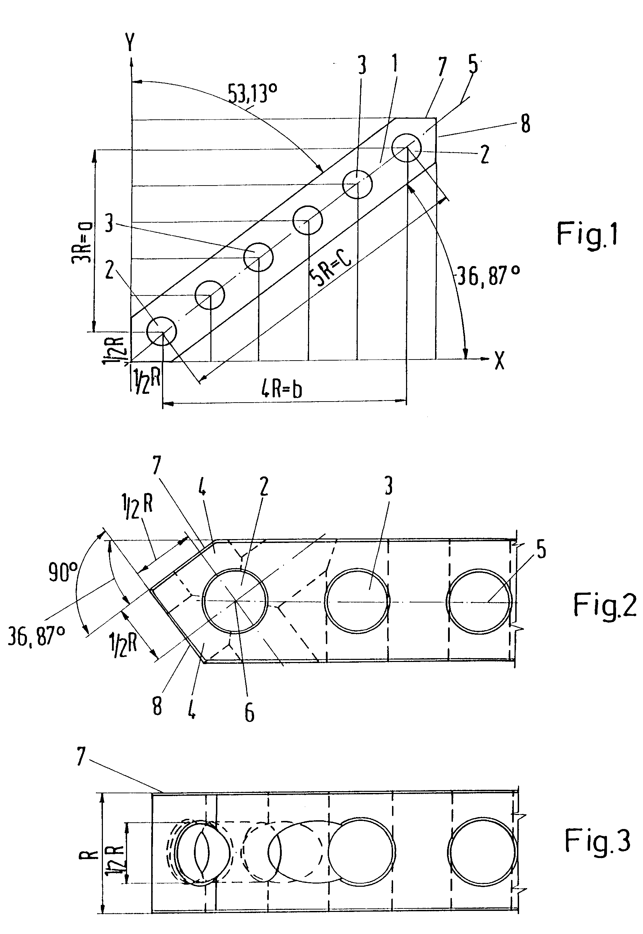

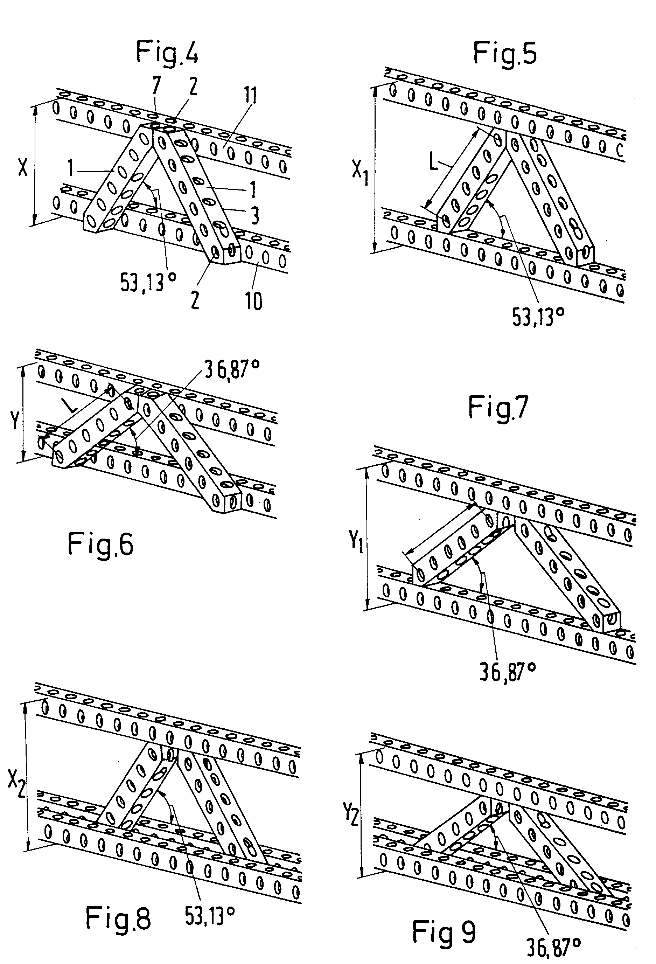

Die in den Fig. 1 bis 3 dargestellte Diagonalstrebe, die beispielsweise zum Aufbau eines Fachwerkes, wie es in Fig. 4 veranschauulicht ist, eingesetzt werden kann, stellt die einfachste Ausführungsform der Diagonalstrebe nach der Erfindung dar.

In Verbindung mit Fig. 1 läßt sich das Prinzip der Diagonalstrebe nach der Erfindung am zweckmäßigsten erläutern.

Das System, wie es aus der EP-PS 222 147 bekannt ist, weist in den zu verbindenden Teilen (Grundplatte und/oder Aufnahmeteile) Verbindungsbohrungen - dort als Paßbohrungen ausgebildet und bezeichnet - auf, die in einem bestimmten Rasterabstand zueinander angeordnet sind.

Wenn nun eine Diagonalstrebe für dieses bekannte System geschaffen werden soll, so entsteht durch die Winkelstellung der Diagonalstrebe das Problem, daß der Rasterabstand "gestört" wird. Dieses wird durch die Ausbildung der Diagonalstrebe nach der Erfindung vermieden.

Die in Fig. 1 in Seitenansicht dargestellte Diagonalstrebe 1 weist an jedem Ende eine Verbindungsquerbohrung 2 senkrecht zur Seitenfläche auf, die in der Zeichenebene liegt. Diese Verbindungsquerbohrungen weisen einen Abstand c = 5R, gleich dem fünffachen Rastermaß auf. Die Mittellinie 5 durch diese beiden Verbindungsquerbohrungen 2 verläuft unter einem Winkel von 36,87° zur X-Achse und in einem Winkel von 53,13° zur Y-Achse. Durch diese Anordnung entstehen an den Stirnseiten Stirnflächen 7 und 8, die rechtwinklig aufeinanderstehen und wiederum zu der Mittellinie 5 in einem Winkel von 36,87° oder 53,13° verlaufen. Aus dieser speziellen geometrischen Anordnung ergibt sich, daß der Abstand a in der Senkrechten, d.h. auf der Y-Achse, dem dreifachen Rasterabstand 3R und der Abstand b = 4R in der Waagerechten, d.h. in der X-Achse dem vierfachen Rasterabstand entspricht. Dieses ist durch den Lehrsatz des Pythagoras bedingt, nach dem das Quadrat über der Hypothenuse c gleich der Summe der Quadrate über den Katheten a und b ist. Der Abstand der Mittellinie 6 gemäß Fig. 2 der Verbindungsquerbohrungen 2 zu den angrenzenden Stirnflächen 7 und 8 beträgt einen halben Rasterabstand, also 1/2 R.

Weiterhin sind in den Stirnflächen auf diesen senkrecht stehende Verbindungsstirnbohrungen 4 vorgesehen, die durch die Mittellinie 6 und durch den Schnittpunkt dieser Mittellinie 6 mit der Mittellinie 5 verlaufen. Es sind also einmal die beiden Verbindungsquerbohrungen 5 an den Enden der Diagonalstrebe 1 und zum anderen an jedem Ende 2 senkrecht zu der jeweiligen Stirnfläche verlaufende Verbindungsstirnbohrungen 4 vorhanden.

Die in den Fig. 1 bis 3 weiterhin dargestellten Verbindungsbohrungen 3 sind lediglich zusätzlich vorgesehen, sie sind für die Erfindung nicht erforderlich. Sie erhalten in vorteilhafter Weise den Rasterabstand ein, so daß weitere Grundelemente angebaut werden können, wie z.B. Anschläge, Stützböcke und dergleichen.

Die in den Fig. 1 bis 3 dargestellte Diagonalstrebe weist einen quadratischen Querschnitt auf.

Die in der Fig. 1 in der X - Y-Ebene liegende Fläche weist eine Höhe auf, die einem Rasterabstanmd entspricht. Der Durchmesser der Verbindungsquerbohrungen 2 und der Verbindungsstirnbohrungen 4 entspricht einem halben Rastermaß. Die Breite (senkrecht zur Ebene der Fig. 1) ist bei dieser Ausführungsform ebenfalls ein Rasterabstand. Sie kann aber auch größer sein, vorzugsweise 2R, so daß die Diagonalstrebe einen rechteckigen Querschnitt mit einer Höhe von 1R und einer Breite von 2R aufweist.

Die Diagonalstrebe, mit der sich die unterschiedlichen flächigen und räumlichen Fachwerke aufbauen lassen, kann auch verwendet werden, um einen rechten Winkel zwischen zwei Grundplatten und/oder einer Grundplatte und einem Aufnahmeteil zusätzlich abzustützen, d.h. in dem rechten Winkel schräg verlaufend mit den Winkeln von 53,13° und 36,87° angeordnet werden.

In den Fig. 4 bis 9 sind verschiedene Grundprinzipien zur Verbindung von Grundplatte 10 und Aufnahmeteil 11 durch Diagonalstreben dargestellt. Die Figuren 4 bis 9 zeigen keine Ausführungsformen der Erfindung, sondern Beispiele, die die Anwendungsmöglichkeiten der beanspruchten Diagonalstrebe erläntern. Hierbei ist es unerheblich, ob nun eine Grundplatte mit einem Aufnahmeteil oder nur Grundplatten und nur Aufnahmeteile verbunden werden. Die Grundplatte ist mit 10 und das Aufnahmeteil mit 11 bezeichnet.

Bei der Verbindungsart nach Fig. 4 liegen die beiden Diagonalstreben 1 seitlich neben der Grundplatte 10 und dem Aufnahmeteil 11. Der Winkel zwischen der waagerechten und jeder Diagonalstrebe 1 beträgt 53,13°. Es ist weiterhin erkennbar, daß die beiden Stirnflächen 7 an den oberen Enden der Querstreben 1 bei der Art des Zusammenbaus nach Fig. 4 aneinander anliegen. Dieses ist möglich, da der Abstand dieser Stirnfläche 7 - und auch der Stirnflächen 8 - von der Mittellinie der Verbindungsquerbohrung 2 einem halben Rasterabstand entspricht. Der Abstand der Verbindungsquerbohrungen ist mit L bezeichnet. Dieser ist gleich 5R. Bei dem Zusammenbau nach Fig. 4 beträgt der senkrechte Abstand zwischen Grundplatte 10 und Aufnahmeteil 11 4R. Das angegebene Maß X unterscheidet sich von 4R dadurch, daß jeweils eine halbe Höhe der Diagonalstrebe, also ein Rasterabstand, hinzukommt. Das Maß X gibt die Gesamthöhe an. Die Maße L und X finden sich in der später wiedergegebenen Tabelle wieder.

Der Aufbau nach Fig. 6 entspricht demjenigen nach Fig. 4, wobei die Diagonalstreben aber so montiert wurden, daß der Winkel zwischen ihnen und der Waagerechten 36,87° beträgt, so daß die Verbindungsbohrungen der zu verbindenden Teile in der Senkrechten einen Abstand von 3R bzw. Y aufweisen.

Die Aufbauarten der Fig. 5, 7, 8 und 9 ergeben sich beim Betrachten der zeichnerischen Darstellung, wobei die einzelnen Abstände X und Y, die, wenn sie auf den Abstand der Verbindungsbohrungen zurückgeführt werden sollen, um einen Rasterabstand R vermindert werden müssen, in der später wiedergegebenen Tabelle zu finden sind.

Beim Betrachten der Fig. 4 bis 9 wird deutlich, daß die Diagonalstreben an ihrem Scheitel entweder unmittelbar aneinander anstoßend angeordnet und montiert werden können oder auch mit einer zusätzlichen senkrechten Mittelstrebe.

Durch die Anordnung neben, zwischen bzw. neben und zwischen den zu verbindenden Teilen 10 und 11, ist ein Abstandssprung von jeweils einem Rastermaß möglich. Dieses ergibt sich aus der im folgenden wiedergegebenen Tabelle, wobei das Rastermaß, d.h. der Rasterabstand, 25 beträgt. Es ist selbstverständlich, daß auch andere Rastermaße wie 20 oder 40 möglich sind. Dann ändert sich das Maß c (Fig. 1), das gleich dem Maß L in den Fig. 4 bis 9 und wiederum gleich 5R ist.

| Bezeichnung | L = 5R | X | $X_1$ | $X_2$ | Y | $Y_1$ | $Y_2$ |
|---|---|---|---|---|---|---|---|
| Strebe 125x25x25 | 125 | 125 | 175 | 150 | 100 | 150 | 125 |
| Strebe 250x25x25 | 250 | 225 | 275 | 250 | 175 | 225 | 200 |
| Strebe 375x25x25 | 375 | 325 | 375 | 350 | 250 | 300 | 275 |
| Strebe 500x25x25 | 500 | 425 | 475 | 450 | 325 | 375 | 350 |
| Strebe 625x25x25 | 625 | 525 | 575 | 550 | 400 | 450 | 425 |
| Strebe 750x25x25 | 750 | 625 | 675 | 650 | 475 | 525 | 500 |
| Strebe 875x25x25 | 875 | 725 | 775 | 750 | 550 | 600 | 575 |
| Strebe 1000x25x25 | 1000 | 825 | 875 | 850 | 625 | 675 | 650 |

**Patentansprüche**

1. Diagonalstrebe für ein System zum Aufbau von Vorrichtungen zum Aufspannen von Werkstücken auf Werkzeugmaschinentischen in definierter und reproduzierbarer Lage, mit einer auf dem Maschinentisch aufsetzbaren Grundplatte (10), die in regelmäßigen Rasterabständen senkrecht zueinander verlaufende Verbindungsbohrungen zur Befestigung von Aufnahmeteilen (11) aufweist, die mit in den gleichen Rasterabständen wie die Grundplatte angeordneten Verbindungsbohrungen versehen sind, gekennzeichnet durch:

1) Verbindungsquerbohrungen (2) in einem Abstand (5R), der dem Fünffachen - oder einem Vielfachen davon - des Rasterabstandes (R) der Verbindungsbohrungen in der Grundplatte (10) und/oder den Aufnahmeteilen (11) entspricht;

2) rechtwinklig aufeinanderstehende Stirnflächen (7,8) an jeder Stirnseite, die zur Mittellinie (5) durch die Verbindungsquerbohrungen (2) einen Winkel von 36,87° bzw. 53,13° aufweisen, und an den beiden Stirnseiten als Wechselwinkel vorgesehen sind;

3) einen halben Rasterabstand (1/2 R) jeder Stirnfläche (7,8) zur Mittellinie (6) durch die angrenzende Verbindungsquerbohrung (2); und

4) Verbindungsstirnbohrungen (4) senkrecht zu jeder Stirnfläche (7,8) durch die Mittellinie (6) der angrenzenden Verbindungsquerbohrung (2).

2. Diagonalstrebe nach Anspruch 1, gekennzeichnet durch einen quadratischen oder rechteckigen Querschnitt.

3. Diagonalstrebe nach Anspruch 2, dadurch gekennzeichnet, daß die Höhe und/oder Breite dem ein- oder mehrfachen Rasterabstand entspricht.

4. Diagonalstrebe nach einem oder mehreren der vorstehenden Ansprüche, dadurch gekennzeichnet, daß der Durchmesser der Verbindungsquerbohrungen 2 und/oder der Verbindungsstirnbohrungen (4) einem halben Rasterabstand (1/2 R) entspricht.

**5.** Diagonalstrebe nach einem oder mehreren der vorstehenden Ansprüche, dadurch gekennzeichnet, daß vorzugsweise im Rasterabstand (R) weitere Verbindungsbohrungen (3) zwischen den im fünffachen Rasterabstand angeordneten Verbindungsquerbohrungen (2) vorgesehen sind.

**6.** Diagonalstrebe nach Anspruch 5, dadurch gekennzeichnet, daß die weiteren Verbindungsbohrungen 3 einen Durchmesser aufweisen, der einem halben Rasterabstand (1/2 R) entspricht.

**Claims**

**1.** Diagonal strut for a system for the construction of means for clamping workpieces on machine tool tables in a clearly defined and reproducible position, with a base plate (10) mountable on the machine table and having in regular register spacings perpendicularly directed connecting holes for fixing receiving parts (11), which are provided with connecting holes arranged with the same register spacings as the base plate, characterized by:

1) cross connecting holes (2) in a spacing (5R) corresponding to five times, or a multiple thereof, of the register spacing (R) of the connecting holes in the base plate (10) and/or the receiving parts (11),

2) faces (7,8) standing on one another at right angles on each end, which to the centre line (5) through the cross connecting holes (2) have an angle of 36.87° or 53.13° and are provided at the two ends as alternate angles,

3) a half register spacing (1/2R) of each face (7,8) to the centre line (6) through the adjacent cross connecting hole (2) and

4) face connecting holes (4) perpendicular to each face (7,8) through the centre line (6) of the adjacent cross connecting hole (2).

**2.** Diagonal strut according to claim 1, characterized by a square or rectangular cross-section.

**3.** Diagonal strut according to claim 2, characterized in that the height and/or width corresponds to one or more register spacings.

**4.** Diagonal strut according to one or more of the preceding claims, characterized in that the diameter of the cross connecting holes (2) and/or the face connecting holes (4) is half a register spacing (1/2R).

**5.** Diagonal strut according to one or more of the preceding claims, characterized in that preferably with the register spacing (R) are provided further connecting holes (3) between the cross connecting holes (2) arranged with five times the register spacing.

**6.** Diagonal strut according to claim 5, characterized in that the further connecting holes (3) have a diameter corresponding to half the register spacing (1/2R).

**Revendications**

**1.** Elément diagonal pour un système de construction de dispositifs de serrage de pièces sur des tables de machines-outils dans une position définie et reproductible, avec une plaque de base (10) qui peut être placée sur la table de machine-outil et comporte à des intervalles nominaux réguliers des perçages de raccordement perpendiculaires entre eux pour la fixation de pièces de réception (11) qui sont pourvues de perçages de raccordement disposés selon les mêmes intervalles nominaux que ceux de la plaque de base, **caractérisé** par :

1) des perçages transversaux de raccordement (2) à un intervalle (5R) qui représente le quintuple, ou un multiple , de l'intervalle nominal (R) des perçages de raccordement dans la plaque de base (10) et/ou dans les pièces de réception (11);

2) sur chaque côté frontal, des surfaces frontales (7, 8) placées à angle droit qui forment avec la ligne médiane (5) passant par les perçages transversaux de raccordement (2) un angle de respectivement 36,87° et 53,13° et sont prévues sur les deux côtés frontaux en tant qu'angles alternes ;

3) un demi-intervalle nominal (1/2 R) de chaque surface frontale (7, 8) par rapport à la ligne médiane (6) passant par le perçage transversal de raccordement (2) adjacent; et

4) des perçages frontaux de raccordement (4) perpendiculairement à chaque surface frontale (7, 8) et traversant la ligne médiane (6) passant par le perçage transversal de raccordement (2) adjacent.

2. Elément diagonal selon la revendication 1, **caractérisé** par une section transversale carrée ou rectangulaire.

3. Elément diagonal selon la revendication 2, **caractérisé** par le fait que la hauteur et/ou la largeur correspond à un intervalle nominal ou à un multiple de celui-ci.

4. Elément diagonal selon l'une ou plusieurs des revendications précédentes, **caractérisé** par le fait que le diamètre des perçages transversaux de raccordement (2) et/ou des perçages frontaux de raccordement (4) correspond à un demi-intervalle nominal (1/2 R).

5. Elément diagonal selon l'une ou plusieurs des revendications précédentes, **caractérisé** par le fait qu'il est de préférence prévu d'autres perçages de raccordement (3) disposés selon l'intervalle nominal (R) entre les perçages transversaux de raccordement (2) disposés à cinq fois l'intervalle nominal.

6. Elément diagonal selon la revendication 5, **caractérisé** par le fait que les autres perçages de raccordement (3) ont un diamètre qui correspond à un demi-intervalle nominal (1/2 R).

Fig.1

Fig.2

Fig.3

## Fig.4

## Fig.5

## Fig.6

## Fig.7

## Fig.8

## Fig 9